(19) Europäisches Patentamt

European Patent Office

Office européen des brevets

(11) **EP 4 525 320 A1**

(12) # EUROPEAN PATENT APPLICATION
published in accordance with Art. 153(4) EPC

(43) Date of publication:
**19.03.2025 Bulletin 2025/12**

(21) Application number: **23815116.1**

(22) Date of filing: **26.05.2023**

(51) International Patent Classification (IPC):
*H04B 7/0413* (2017.01)

(52) Cooperative Patent Classification (CPC):
**H04B 7/0413; H04B 7/0456; H04B 7/06**

(86) International application number:
**PCT/CN2023/096665**

(87) International publication number:
**WO 2023/231933 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.06.2022 CN 202210617141**

(71) Applicant: **Huawei Technologies Co., Ltd.
Shenzhen, Guangdong 518129 (CN)**

(72) Inventors:
• **HANG, Haicun
Shenzhen, Guangdong 518129 (CN)**
• **CHEN, Jiaxuan
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) This application provides a communication method and apparatus, applicable to the communication field. The method includes: receiving first information from an access network device, where the first information indicates a first performance difference between performance of a first decoder in the access network device and performance of a second decoder in a terminal device; decoding, via the second decoder, an encoded bit stream corresponding to channel data, to obtain channel information; determining a first value of a rank based on the first performance difference and the channel information; and sending, to the access network device, the first value and a channel quality indicator corresponding to the first value. According to the method provided in this application, the terminal device determines the first value of the rank based on the first performance difference fed back by the access network device, so that the first value fed back by the terminal device to the access network device better matches a precoding matrix determined by the access network device, to improve feedback precision and accuracy.

FIG. 4

**Description**

**CROSS-REFERENCE TO RELATED APPLICATIONS**

This application claims priority to Chinese Patent Application No. 202210617141.2, filed with the China National Intellectual Property Administration on June 1, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A wireless communication system formulated by the 3rd generation partnership project (the 3rd generation partnership project, 3GPP) has developed to a 5th generation (5th generation, 5G) system, that is, a new radio (new radio, NR) system. A 5G communication system has higher requirements on a system capacity, spectral efficiency, and the like. In the 5G communication system, application of a massive multiple-input multiple-output (massive multiple-input multiple-output, massive MIMO) technology plays a crucial role in improving the spectral efficiency of the system. A base station can provide high-quality services for more user equipments (user equipments, UEs) simultaneously by using the massive MIMO technology. A key step is that the base station precodes downlink data. Through the precoding, spatial multiplexing (spatial multiplexing) can be implemented, interference between different data streams can be reduced, and a signal to interference plus noise ratio (signal to interference plus noise ratio, SINR) at a receive end can be increased, to increase a system throughput. For the base station to more accurately precode the downlink data of the UE, the UE may feed back channel state information (channel state information, CSI) of a downlink channel to the base station, and the base station restores downlink channel information based on the CSI, and determines a precoding matrix by using the restored downlink channel information, to perform precoding. How to enable a base station to obtain more accurate channel state information is a technical problem worth studying.

**SUMMARY**

This application provides a communication method and apparatus, to enable a network side to obtain more accurate channel state information.

According to a first aspect, a first communication method is provided. The method may be performed on a terminal device side. The method may be performed by using software, hardware, or a combination of software and hardware. For example, the method is performed by a terminal device, or is performed by a circuit system, or is performed by a large device including the terminal device. The circuit system can implement a function of the terminal device. The method includes: The terminal device receives first information from an access network device, where the first information is used for determining a first performance difference between performance of a first decoder in the access network device and performance of a second decoder in the terminal device; decodes, via the second decoder, an encoded bit stream corresponding to channel data, to obtain channel information; determines a first value of a rank based on the first performance difference and the channel information; and sends, to the access network device, a rank indicator and a channel quality indicator corresponding to the first value, where the rank indicator indicates the first value.

According to the foregoing method, the terminal device determines the first value of the rank based on the first performance difference fed back by the access network device, so that the first value fed back by the terminal device to the access network device better matches a precoding matrix determined by the access network device, to improve feedback precision and accuracy.

In a possible implementation, the method further includes: sending, to the access network device, the encoded bit stream corresponding to the channel data.

In a possible implementation, the first information and the first performance difference satisfy a relationship of a preset function, and the method further includes: using, as the first performance difference, an output value that is of the preset function and that is obtained by using the first information as an input value.

In this implementation, the first information and the first performance difference satisfy the relationship of the preset function, so that flexibility of feeding back the first performance difference can be improved, thereby improving system efficiency.

In a possible implementation, the first information is an index of the first performance difference, and the method further includes: using a performance difference whose index is the first information as the first performance difference.

In this implementation, the first information is the index of the first performance difference. This implementation is flexible, and can also reduce overheads for sending the first information.

In a possible implementation, the first information is an index of a second performance difference, and the second performance difference is a performance difference between the performance of the first decoder and pre-configured reference performance. The method further includes: determining the first performance difference based on the second performance difference and the reference performance.

In a possible implementation, the first information is the first performance difference.

In this implementation, the terminal device can directly determine the first performance difference based on the first information. This implementation has low complexity, and can reduce system complexity.

In a possible implementation, a maximum value of the rank is N, the first information indicates N first performance differences, and N is an integer greater than 0. Each of the N first performance differences corresponds to one stream.

In this implementation, each stream of a channel corresponds to one first performance difference, so that feedback accuracy can be improved.

In a possible implementation, the determining a first value of a rank based on the first performance difference and the channel information includes: determining, based on the first performance difference and the channel information, a channel indicator corresponding to each of N values of the rank, where N is an integer greater than 0; and using a value of an optimal channel indicator in channel indicators corresponding to the N values as the first value.

In this implementation, the value of the optimal channel indicator is used as the first value, so that a channel throughput can be increased, thereby improving system efficiency.

According to a second aspect, a first communication method is provided. The method may be performed on an access network device side. The method may be performed by using software, hardware, or a combination of software and hardware. For example, the method is performed by an access network device, or is performed by a circuit system, or is performed by a large device including the access network device. The circuit system can implement a function of the access network device. The method includes: The access network device determines a first performance difference between performance of a first decoder in the access network device and performance of a second decoder in a terminal device; sends first information to the terminal device, where the first information is used for determining the first performance difference; and receives, from the terminal device, a rank indicator and a channel quality indicator corresponding to a first value, where the rank indicator indicates the first value, the first value is determined based on the first performance difference and channel information, and the channel information is obtained by decoding, via the second decoder, an encoded bit stream corresponding to channel data.

In a possible implementation, the method further includes: sending, to the access network device, the encoded bit stream corresponding to the channel data.

In a possible implementation, the first information and the first performance difference satisfy a relationship of a preset function, and when an input value of the preset function is the first information, an output value of the preset function is the first performance difference.

In a possible implementation, the first information is an index of the first performance difference.

In a possible implementation, the first information is an index of a second performance difference, the second performance difference is a performance difference between the performance of the first decoder and pre-configured reference performance, and the first performance difference is determined based on the second performance difference and the reference performance.

In a possible implementation, a maximum value of a rank is N, the first information indicates N first performance differences, and N is an integer greater than 0.

In a possible implementation, the first value is a value of an optimal channel indicator in channel indicators corresponding to N values of the rank, N is an integer greater than 0, and a channel indicator corresponding to each of the N values of the rank is determined based on the first performance difference and the channel information.

According to a third aspect, an embodiment of this application provides a communication apparatus. The communication apparatus may be a terminal device, a module that can implement a function on a terminal device side, or a chip that can be disposed inside the terminal device. The communication apparatus has a function for implementing the first aspect. For example, the communication apparatus includes a corresponding module, unit, or means for performing some or all of the steps in the first aspect. The function, the unit, or the means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive information from a second device, and the processing unit may be configured to perform some internal operations of the communication apparatus. Functions performed by the processing unit and the communication unit may correspond to operations in the first aspect.

In a possible design, the communication apparatus includes a processor, and may further include a transceiver.

The transceiver is configured to receive and send a signal, and the processor completes the method according to any one of the possible designs or implementations of the first aspect by using the transceiver. The communication apparatus may further include one or more memories. The memory is coupled to the processor, and the memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor, and the processor may be coupled to a memory. The memory may store a computer program or instructions for implementing the function in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit. The processor is configured to: communicate with another apparatus through the interface circuit, and perform the method according to any one of the possible designs or implementations of the first aspect.

According to a fourth aspect, an embodiment of this application provides a communication apparatus. The communication apparatus may be an access network device, a module that can implement a function on an access network device side, or a chip that can be disposed inside the access network device. The communication apparatus has a function for implementing the second aspect. For example, the communication apparatus includes a corresponding module, unit, or means for performing the operations in the second aspect. The module, the unit, or the means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive information from a first device, and the processing unit may be configured to perform some internal operations of the communication apparatus. Functions performed by the processing unit and the communication unit may correspond to operations in the second aspect.

In a possible design, the communication apparatus includes a processor, and may further include a transceiver. The transceiver is configured to receive and send a signal, and the processor completes the method according to any one of the possible designs or implementations of the second aspect by using the transceiver. The communication apparatus may further include one or more memories. The memory is coupled to the processor, and the memory may store a computer program or instructions for implementing the function in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor, and the processor may be coupled to a memory. The memory may store a computer program or instructions for implementing the function in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and an interface circuit. The processor is configured to: communicate with another apparatus through the interface circuit, and perform the method according to any one of the possible designs or implementations of the second aspect.

According to a fifth aspect, an embodiment of this application provides a communication system. The communication system includes the communication apparatus according to the third aspect and the communication apparatus according to the fourth aspect.

According to a sixth aspect, a chip is provided. The chip includes a processor, may further include a memory, and is configured to execute a computer program or instructions stored in the memory, to enable the chip to implement the method according to any one of the first aspect and the possible implementations of the first aspect, or to enable the chip to implement the method according to any one of the second aspect and the possible implementations of the second aspect.

According to a seventh aspect, an embodiment of this application provides a computer-readable storage medium. The computer storage medium stores computer-readable instructions. When a computer reads and executes the computer-readable instructions, the computer is enabled to implement the method according to any one of the possible designs of the first aspect and the second aspect.

According to an eighth aspect, an embodiment of this application provides a computer program product. When a computer reads and executes the computer program product, the computer is enabled to implement the method according to any one of the possible designs of the first aspect and the second aspect.

According to a ninth aspect, an embodiment of this application provides a chip. The chip includes a processor.

The processor is coupled to a memory and is configured to read and execute a software program stored in the memory, to implement the method according to any one of the possible designs of the first aspect and the second aspect.

According to a tenth aspect, a communication apparatus is provided, and includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the first aspect and the possible implementations of the first aspect by using a logic circuit or by executing a computer program or instructions.

According to an eleventh aspect, a communication apparatus is provided, and includes a processor and an interface circuit. The interface circuit is configured to: receive a signal from another communication apparatus other than the communication apparatus and transmit the signal to the processor, or send a signal from the processor to another communication apparatus other than the communication apparatus. The processor is configured to implement the method according to any one of the second aspect and the possible implementations of the second aspect or the method according to any one of the third aspect and the possible implementations of the third aspect by using a logic circuit or by executing a computer program or instructions.

According to a twelfth aspect, a communication apparatus is provided, and includes a processor and a memory. The processor is coupled to the memory, and the processor is configured to execute a computer program or instructions stored in the memory, to enable the communication apparatus to implement the method according to any one of the first aspect and the possible implementations of the first aspect.

According to a thirteenth aspect, a communication apparatus is provided, and includes a processor and a memory. The processor is coupled to the memory, and the processor is configured to execute a computer program or instructions stored in the memory, to enable the communication apparatus to implement the method according to any one of the second aspect and the possible implementations of the second aspect.

These aspects or other aspects of this application are more readily apparent in descriptions of the following embodiments.

**BRIEF DESCRIPTION OF DRAWINGS**

FIG. 1 is a diagram of a communication system according to an embodiment of this application;
FIG. 2 is a diagram of an application framework according to an embodiment of this application;
FIG. 3 is a diagram of a reference model according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

**DESCRIPTION OF EMBODIMENTS**

To make the objectives, technical solutions, and advantages of this application clearer, the following further describes this application in detail with reference to the accompanying drawings.

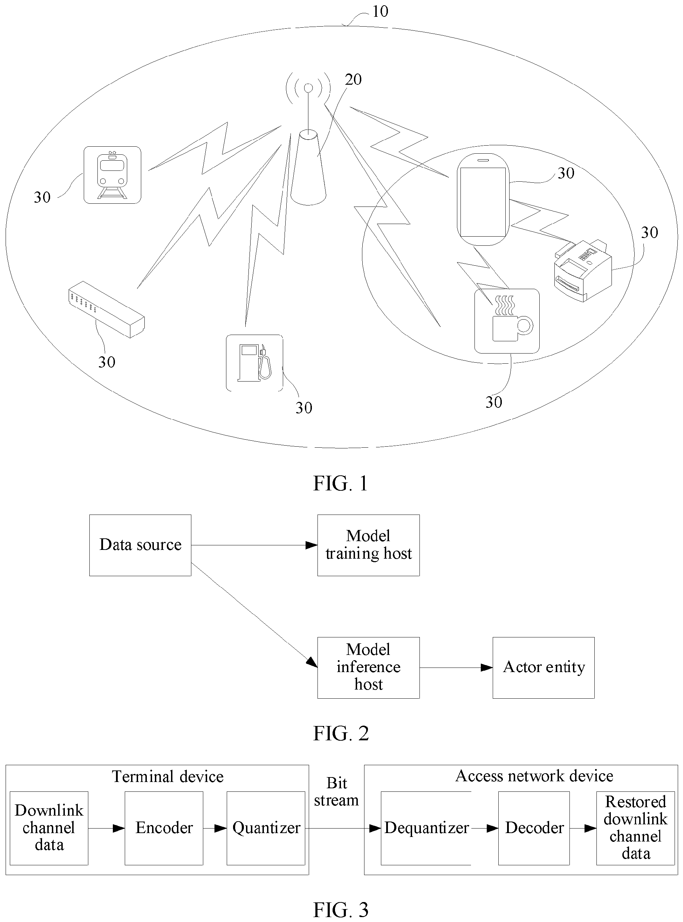

A technology provided in this application may be applied to a communication system 10 shown in FIG. 1. The communication system 10 includes one or more communication apparatuses 30 (for example, terminal devices). The one or more communication apparatuses 30 are connected to one or more core network (core network, CN) devices via one or more access network (radio access network, RAN) devices 20, to implement communication between a plurality of communication devices. For example, the communication system 10 is a communication system that supports a 4th generation (4th generation, 4G) (including long term evolution (long term evolution, LTE)) access technology, a communication system that supports a 5G (sometimes also referred to as new radio (new radio, NR)) access technology, a wireless fidelity (wireless fidelity, Wi-Fi) system, a cellular system related to the 3rd generation partnership project (3rd generation partnership project, 3GPP), a communication system that supports convergence of a plurality of wireless technologies, or a future-oriented evolution system. This is not limited.

It should be understood that a quantity of devices in the communication system shown in FIG. 1 is merely used as an example, and this application is not limited thereto. During actual application, the communication system may further include more terminal devices and more access network devices, and may further include another device, for example, may include a core network device and/or a node configured to implement an artificial intelligence function.

A network architecture shown in FIG. 1 is applicable to communication systems using various radio access technologies (radio access technologies, RATs), for example, a 4G communication system, a 5G (also referred to as new radio (new radio, NR)) communication system, a transition system between an LTE communication system and a 5G communication system, where the transition system may also be referred to as a 4.5G communication system, or a future communication system, for example, a 6G communication system. The network architecture and a service scenario that are described in this application are intended to describe the technical solutions in this application more clearly, but do not constitute a limitation on the technical solutions provided in this application. A person of ordinary skill in the art may know that with evolution of the network architecture and emergence of a new service scenario, the technical solutions provided in this application are also applicable to similar technical problems.

The following separately describes in detail the terminal device and the access network device in FIG. 1.

In this application, the terminal device may be referred to as a terminal for short. The terminal device may be a device having a wireless transceiver function. The terminal device may be mobile or fixed. The terminal device may be deployed on the land, including an indoor device, an outdoor device, a handheld device, or a vehicle-mounted device; may be deployed on water (for example, on a ship); or may be deployed in air (for example, on an aircraft, a balloon, or a satellite). The terminal device may include a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in telemedicine (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, a vehicle-mounted device, a wearable device, a terminal device in a future 5th generation (5th generation, 5G) network, a terminal device in a future evolved public land mobile network (public land mobile network, PLMN), or the like. The terminal device sometimes may also be referred to as a user equipment (user equipment, UE). Optionally, the terminal device may communicate with a plurality of access network devices that use different technologies. For example, the terminal device may communicate with an access network device that supports LTE, may communicate with an access network device that supports 5G, or may implement dual connectivity to an access network device that supports LTE and an access network device that supports 5G. This is not limited in this application.

In this application, an apparatus configured to implement a function of the terminal device may be the terminal device, or may be an apparatus that can support the terminal device in implementing the function, for example, a chip system, a hardware circuit, a software module, or a combination of a hardware circuit and a software module. The apparatus may be installed in the terminal device or may be used together with the terminal device. In the technical solutions provided in this application, an example in which the apparatus configured to implement the function of the terminal device is the terminal device and the terminal device is a UE is used to describe the technical solutions provided in this application.

In this application, the access network device is a node or a device that connects the terminal device to a wireless network, and the access network device may also be referred to as a network device or a base station. The access network device includes, for example, but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), and/or a mobile switching center. Alternatively, the access network device may be a module configured to implement some or all functions of the base station. For example, the access network device may be at least one of a central unit (central unit, CU), a distributed unit (distributed unit, DU), a central unit control plane (CU control plane, CU-CP) node, a central unit user plane (CU user plane, CU-UP) node, integrated access and backhaul (integrated access and backhaul, IAB), or a radio controller in a cloud radio access network (cloud radio access network, CRAN) scenario. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this application, an apparatus configured to implement a function of the access network device may be the access network device, or may be an apparatus that can support the access network device in implementing the function, for example, a chip system, a hardware circuit, a software module, or a combination of a hardware circuit and a software module. The apparatus may be installed in the access network device or may be used together with the access network device. In the technical solutions provided in this application, an example in which the apparatus configured to implement the function of the access network device is the access network device and the access network device is a base station is used to describe the technical solutions provided in this application.

Communication between the access network device and the terminal device complies with a specific protocol layer structure. The protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, or a physical (physical, PHY) layer. For example, the user plane protocol layer structure may include at least one of the following: a service data adaptation protocol (service data adaptation protocol, SDAP) layer, a PDCP layer, an RLC layer, a MAC layer, and a physical layer.

The protocol layer structure between the access network device and the terminal device may be considered as an access stratum (access stratum, AS) structure. Optionally, a non-access stratum (non-access stratum, NAS) may further exist over the AS, and is used by the access network device to forward information from the core network device to the terminal device, or is used by the access network device to forward information from the terminal device to the core network device. In this case, it may be considered that there is a logical interface between the terminal device and the core network device. Optionally, the access network device may forward the information between the terminal device and the core network device through transparent transmission. For example, a NAS message may be mapped to or included in RRC signaling as an element of the RRC signaling.

Optionally, the protocol layer structure between the access network device and the terminal device may further include an artificial intelligence (artificial intelligence, AI) layer used for transmitting data related to an AI function.

In addition to the communication between the access network device and the terminal device, a method provided in this application may be used for communication between other communication devices, for example, communication between a macro base station and a micro base station in a wireless backhaul link, or communication between a first terminal device and a second terminal device in a sidelink (sidelink, SL). This is not limited. This application is described by using the communication between the access network device and the terminal device as an example.

When sending data to the terminal device, the access network device may perform precoding based on channel state information (channel state information, CSI) fed back by the terminal device. For ease of understanding of this application, the following briefly describes some technical terms in this application.

1. Precoding technology

When channel state information is known, an access network device may process a to-be-sent signal by using a precoding matrix that matches a channel condition. Based on the technology, the precoded to-be-sent signal can match a channel, so that quality (for example, a signal to interference plus noise ratio (signal to interference plus noise ratio, SINR)) of a signal received by a terminal device is improved, to further increase a system throughput. Based on the precoding technology, a sending device (for example, the access network device) and a plurality of receiving devices (for example, terminal devices) can effectively perform transmission on a same time-frequency resource, that is, effectively implement multi-user multiple-input multiple-output (multi-user multiple-input multiple-output, MU-MIMO). Based on the precoding technology, the sending device (for example, the access network device) and the receiving device (for example, the terminal device) can effectively transmit a plurality of data streams on a same time-frequency resource, that is, effectively implement single-user multiple-input multiple-output (single-user multiple-input multiple-output, SU-MIMO). It should be noted that related descriptions of the precoding technology are merely examples for ease of understanding, and are not intended to limit the disclosure scope of this application. In a specific implementation process, the sending device may alternatively perform precoding in another manner. For example, when channel information (for example, but not limited to a channel matrix) cannot be obtained, precoding is performed by using a preset precoding matrix or through weighted processing. For brevity, specific content thereof is not described in this specification.

2. CSI

When performing precoding, an access network device precodes downlink data by using a precoding matrix. To obtain the precoding matrix, the access network device needs to obtain CSI of a downlink channel, to determine the precoding matrix based on the CSI. In a wireless communication system, CSI feedback is information that is reported by a receive end (for example, a terminal device) of data (for example, but not limited to data carried on a physical downlink shared channel (physical downlink shared channel, PDSCH)) to a transmit end (for example, the access network device) and that is used for describing a channel attribute of a communication link. Higher precision of the CSI fed back by the terminal device indicates more complete channel information that is fed back, and more accurate precoding matrix determined by the access network device based on the CSI, so that downlink spatial multiplexing performance is better, a received signal to interference plus noise ratio of the terminal device is higher, and a system capacity is higher. The CSI includes one or more of information such as a downlink channel matrix, a precoding matrix indicator (precoding matrix indicator, PMI), a rank indicator (rank indicator, RI), or a channel quality indicator (channel quality indicator, CQI). The foregoing listed content included in the CSI is merely an example for description, and shall not constitute any limitation on this application.

3. Neural network (neural network, NN)

The neural network is a specific implementation form of a machine learning technology. According to a universal approximation theorem, the neural network can theoretically approximate to any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

For example, a deep neural network (deep neural network, DNN) is a neural network with a large quantity of layers. Depending on different network structures and/or use scenarios, the DNN may include a multi-layer perceptron (multi-layer perceptron, MLP), a convolutional neural network (convolutional neural network, CNN), a recurrent neural network (recurrent neural network, RNN), and the like. A specific form of the DNN is not limited in this application.

FIG. 2 is a diagram of an application framework of AI in a communication system. A data source (data source) is configured to store training data and inference data. A model training host (model training host) analyzes or trains the training data (training data) provided by the data source to obtain an AI model, and deploys the AI model in a model inference host (model inference host). The model inference host uses the AI model to perform inference based on the inference data provided by the data source, to obtain an inference result. The inference result is planned by an actor (actor) entity uniformly, and is sent to one or more actor objects (for example, network entities) for execution.

4. Reference encoder (encoder) model and reference decoder (decoder) model

To increase a system capacity and reduce CSI feedback overheads, CSI may be fed back in a CSI compression manner of deep learning. A deep learning-based CSI compression and feedback technology is to perform CSI compression and feedback by using a CNN-based auto-encoder (auto-encoder, AE) model. The AE model includes an AI encoder model and an AI decoder model that are used together. The AI encoder model and the AI decoder model may be AI models obtained through analysis or training of training data provided by a data source. In this application, the AI encoder model is referred to as an encoder for short, and the AI decoder model is referred to as a decoder for short. For example, as shown in FIG. 3, after preprocessing downlink channel data via an encoder, a terminal device encodes the downlink channel data via the encoder, to obtain an encoded bit stream, and then quantizes the bit stream via a quantizer, to obtain a quantized bit stream. The terminal device may feed back the quantized bit stream to an access network device. Correspondingly, the access network device processes the received bit stream via a dequantizer, and then inputs the bit stream to the decoder for decoding, to obtain the restored downlink channel data.

In this application, an entity for training an AI encoder model and an AI decoder model may be an access network device, a terminal device, or a third-party network entity. For example, when the entity for training the AI encoder model and the AI decoder model is the access network device, the access network device may deliver a trained AI encoder model and a trained AI decoder model to a terminal device, and the terminal device may directly use the trained AI encoder model and the trained AI decoder model based on a received network model, or use the trained AI encoder model and the trained AI decoder model after specific adjustment. When the entity for training the AI encoder model and the AI decoder model is the terminal device, the terminal device may upload a trained AI encoder model and a trained AI decoder model to a network-side device. When the entity for training the AI encoder model and the AI decoder model is the third-party network entity, an access network device or a terminal device may download the AI encoder model and the AI decoder model from the third-party network entity.

In common AI-based CSI compression and quantization, both an encoder and a decoder exist. After a terminal device side performs an encoding operation, an access network device side needs to perform a corresponding decoding operation. In this case, a terminal device and an access network device need to know learned features of each other. The devices do not need to fully know network structures or network parameters, that is, specific implementation methods, of each other, but only need to know implemented functions of each other. In a possible implementation, a reference model is used. In other words, a set of reference models is defined in a protocol, including a reference encoder and a reference decoder. Both the terminal device and the access network device may obtain the reference encoder and the reference decoder based on descriptions in the protocol. The terminal device may train, based on the reference decoder, an encoder matching the reference decoder, and the access network device may train, based on the reference encoder, a decoder matching the reference encoder.

Because the terminal device feeds back, to the access network device, a bit stream encoded by the encoder, and the terminal device can determine only the reference decoder and cannot determine the decoder that is trained by the access network device based on the reference decoder, the terminal device cannot learn of downlink channel data finally restored by the access network device. In addition, in this method, the access network device needs to determine CSI of a downlink channel based on the restored downlink channel data. Consequently, overheads of the access network device are high, and especially when a large quantity of terminal devices access the access network device, load and power consumption of the access network device increase.

In view of this, this application provides a technical solution to resolve the foregoing problem.

The ordinal numbers such as "first" and "second" in this application are used to distinguish between a plurality of objects, and are not used to limit sizes, content, orders, time sequences, application scenarios, priorities, importance, or the like of the plurality of objects. For example, first indication information and second indication information may be same indication information, or may be different indication information. In addition, this type of name does not indicate that sizes, transmission modes, indicated content, priorities, application scenarios, importance, or the like of the two pieces of indication information are different.

The following describes the method provided in this application with reference to the accompanying drawings. In the methods, included steps or operations are merely examples. In this application, other operations or variations of various operations may be further performed. In addition, the steps may be performed in an order different from that presented in this application, and it is possible that not all of the operations need to be performed.

In the following procedure, interaction between a terminal device and an access network device is mainly used as an example for description. When the technical solutions provided in this application are applied to interaction between other devices, adaptive adjustment may be performed according to the method provided in this application.

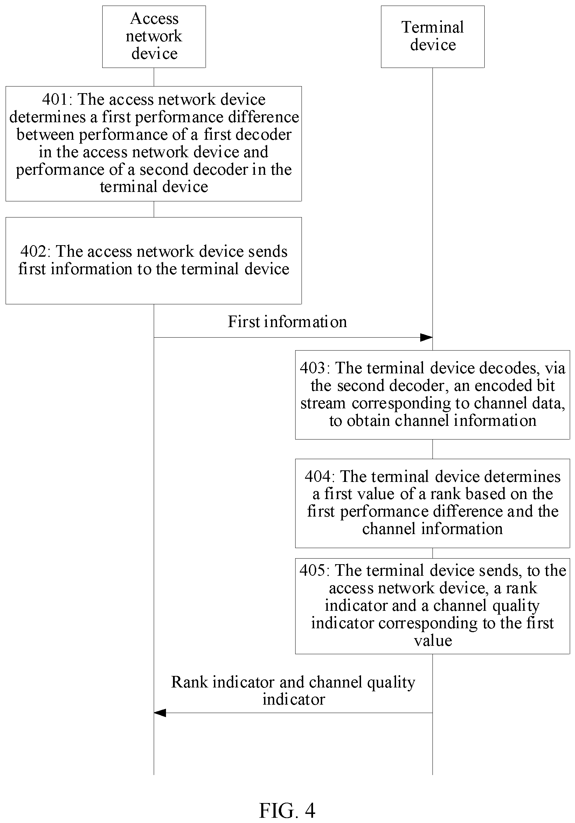

FIG. 4 is a schematic flowchart of a communication method according to an embodiment of this application. The method includes the following steps.

S401: An access network device determines a first performance difference between performance of a first decoder in the access network device and performance of a second decoder in a terminal device.

In this application, a reference encoder and a reference decoder are agreed on between the terminal device and the access network device. The reference decoder is a decoder that matches the reference encoder, and the first decoder is obtained through training based on the reference encoder. The second decoder is a reference decoder, and the access network device can determine the performance of the second decoder, so that the first performance difference can be determined.

In this application, the first performance difference may be in a unit of decibel (dB), or may be a linear value. This is not limited in this application.

S402: The access network device sends first information to the terminal device. Correspondingly, the terminal device receives the first information from the access network device.

The first information is used for determining the first performance difference.

In this application, a difference between the performance of the first decoder and the performance of the second decoder, namely, the first performance difference, may be related to a value of a rank (rank) of a channel, or may be irrelevant to the value of the rank.

If the first performance difference is irrelevant to the value of the rank, the first performance difference remains unchanged in the case of different values of the rank. In other words, the different values of the rank correspond to a same first performance difference. If the first performance difference is related to the value of the rank, different values of the rank correspond to different first performance differences. In this case, when a maximum value of the rank is N, the channel includes N streams, the first information indicates N first performance differences, each first performance difference corresponds to one stream, and N is an integer greater than 0.

In this application, if the first performance difference is irrelevant to the value of the rank, the first information may be implemented in the following manners.

In a first implementation, the first information is the first performance difference. For example, if the first performance difference is 0.5, the first information is 0.5.

In this implementation, the terminal device can directly determine the first performance difference based on the first information. This implementation has low complexity, and can reduce system complexity.

In a second implementation, the first information and the first performance difference satisfy a relationship of a preset function.

In this implementation, the terminal device uses the first information as an input value of the preset function, and uses, as the first performance difference, an output value obtained by using the first information as the input value.

For example, the preset function may satisfy the following form: $y=f(PD\_index,a)$. y represents the first performance difference, PD_index represents the first information, a represents a step, and a value of a is preset, or a may be configured by the access network device, for example, a=0.5. A specific form of $f(PD\_index,a)$ is not limited in this application. For example, the preset function may be $y=PD\_index+a$. In this case, when PD_index=0, the first performance difference is a; when PD_index=1, the first performance difference is 1+a; and other cases are deduced by analogy.

The foregoing is merely an example, and the preset function may alternatively be in another form. Examples are not described herein one by one.

This implementation can reduce overheads for sending the first information, and improve system efficiency.

In a third implementation, each performance difference corresponds to one index, and the first information is an index of the first performance difference.

In this implementation, a correspondence between a performance difference and an index may be agreed on in a protocol, or may be configured by the access network device. This is not limited in this application.

In this implementation, the terminal device obtains the first information, and uses a performance difference whose index is the first information as the first performance difference.

For example, indexes of a plurality of performance differences are defined in the protocol. For example, a relationship between a performance difference and an index may be shown in Table 1. It is assumed that four bits are used as an example of the index herein. A quantity of bits included in the index is not limited in this application.

**Table 1**

| Index | Performance difference (in a unit of dB) |
|-------|------------------------------------------|
| 0000 | 0.5 |
| 0001 | 0.75 |
| ... | ... |
| 1110 | -0.5 |
| 1111 | 0 |

With reference to Table 1, if the first information received by the terminal device is 0000, the first performance difference is 0.5; or if the first information received by the terminal device is 1111, the first performance difference is 0. Other cases are not described in detail.

This implementation is flexible, and can also reduce overheads for sending the first information.

In a fourth implementation, the access network device may pre-configure a reference performance for the terminal device, and the access network device may indicate a performance difference between the performance of the first decoder and the pre-configured reference performance based on the first information, so that the terminal device may determine the first performance difference based on a second performance difference and the reference performance.

In this implementation, if the first information is the second performance difference, the terminal device may use a sum of the first information and the reference performance as the first performance difference.

If the first information and the second performance difference satisfy a relationship of a preset function, the terminal device uses the first information as an input value of the preset function, uses, as the second performance difference, an output value obtained by using the first information as the input value, and uses a sum of the second performance difference and the reference performance as the first performance difference.

If the first information is an index of the second performance difference, the terminal device may determine the second performance difference based on the first information, and then use a sum of the second performance difference and the reference performance as the first performance difference.

For example, the reference performance is PD_base, and a relationship between a performance difference and an index defined in a protocol may be shown in Table 2.

**Table 2**

| Index | Performance difference (in a unit of dB) |
|-------|------------------------------------------|
| 0000 | 0.1 |
| 0001 | 0.2 |
| 0010 | 0.3 |
| 0011 | 0.4 |
| 0100 | 0.5 |

With reference to Table 2, if the first information received by the terminal device is 0000, the second performance difference is 0.1, and the first performance difference is 0.1+PD_base; or if the first information received by the terminal device is 0011, the second performance difference is 0.4, and the first performance difference is 0.4+PD_base. Other cases are not described in detail.

In this application, if the first performance difference is related to the value of the rank, the first information may be implemented in the following manners.

In a fifth implementation, the first information includes N first performance differences, and different values of the rank correspond to different first performance differences. For example, because the value of the rank represents a quantity of streams in the channel, when the value of the rank is X, the rank corresponds to X first performance differences, and each of X streams corresponds to one of the X first performance differences. For example, the first information includes two first performance differences, which are 0.5 and 0.75 respectively. When the value of the rank is 1, the first performance difference is 0.5. When the value of the rank is 2, the channel includes two streams. The first performance difference corresponding to a first stream is 0.5, and the first performance difference corresponding to a second stream is 0.75.

In a sixth implementation, the first information and the first performance difference satisfy a relationship of a preset function.

For example, the preset function may satisfy the following form: $y=f(PD\_index,a)$. y represents the first performance difference, PD_index represents the first information, a represents a step, a value of a is preset, or a may be configured by the access network device, and different values of the rank correspond to different values of a.

For example, when the value of the rank is 1, the value of a is 0.25, and the preset function is $y=f(PD\_index,0.25)$; or when the value of the rank is 2, the value of a is 0.5, and the preset function is $y=f(PD\_index,0.5)$. For example, the preset function may be $y=PD\_index+a$. When PD_index=0 and the value of the rank is 1, the first performance difference is 0.25=0+0.25; when PD_index=0 and the value of the rank is 2, the first performance difference is 0.5=0+0.5; and other cases are deduced by analogy.

The foregoing is merely an example, and the preset function may alternatively be in another form. Examples are not described herein one by one.

In a seventh implementation, the first information is an index jointly corresponding to N first performance differences, and each performance difference corresponds to a different value of the rank.

In this implementation, a correspondence between a performance difference and an index may be agreed on in a protocol, or may be configured by the access network device. This is not limited in this application.

In this implementation, one index corresponds to the N first performance differences, so that overheads of the first information can be reduced.

For example, it is assumed that a maximum value of the rank is 2, and a quantity of streams in the channel is 2. A relationship between a performance difference and an index may be shown in Table 3.

**Table 3**

| Index | Performance difference in the case of the rank being 1, or performance difference corresponding to a first stream in the case of the rank being 2 | Performance difference corresponding to a second stream in the case of the rank being 2 |
|---|---|---|
| 0000 | 0.5 | 0.25 |
| 0001 | 0.75 | 0.5 |
| ... | ... | ... |
| 1110 | -0.5 | -0.25 |
| 1111 | 0 | 0 |

With reference to Table 3, if the first information received by the terminal device is 0000, when the rank is 1, the first performance difference is 0.5, or when the rank is 2, the first performance difference corresponding to the second stream is 0.25. Other cases are not described in detail.

In an eighth implementation, the first information is an index corresponding to the first performance difference, and different values of the rank correspond to different performance difference indexes.

In this implementation, a correspondence between a performance difference and an index may be agreed on in a protocol, or may be configured by the access network device. This is not limited in this application.

In this implementation, one index corresponds to one first performance difference, so that flexibility of indicating the performance difference can be improved.

For example, it is assumed that a maximum value of the rank is 2, and a quantity of streams in the channel is 2. A relationship between a performance difference and an index may be shown in Table 4.

**Table 4**

| Index | Performance difference in the case of the rank being 1, or performance difference corresponding to a first stream in the case of the rank being 2 | Index | Performance difference corresponding to a second stream in the case of the rank being 2 (in a unit of dB) |
|---|---|---|---|
| 0000 | 0.5 | 1000 | 0.25 |

(continued)

| Index | Performance difference in the case of the rank being 1, or performance difference corresponding to a first stream in the case of the rank being 2 | Index | Performance difference corresponding to a second stream in the case of the rank being 2 (in a unit of dB) |
|---|---|---|---|
| 0001 | 0.75 | 1001 | 0.5 |
| ... | ... | ... | ... |
| 0110 | -0.5 | 1110 | -0.25 |
| 0111 | 0 | 1111 | 0 |

With reference to Table 4, if the first information received by the terminal device is 0000, the first performance difference is 0.5, and the corresponding rank is 1; or if the first information received by the terminal device is 1000, the first performance difference is 0.25, and the corresponding rank is 2.

The foregoing is merely an example. There may be another implementation of the first information. This is not limited in this application, and examples are not described herein one by one.

S403: The terminal device decodes, via the second decoder, an encoded bit stream corresponding to channel data, to obtain channel information.

In this application, the terminal device may measure a reference signal from the access network device, to obtain the channel data. The channel data can represent information about a downlink channel matrix. The terminal device may encode the channel data via the reference encoder, to obtain the encoded bit stream. The channel information obtained by the terminal device by decoding the encoded bit stream via the second decoder is information for predicting that the access network device decodes the encoded bit stream.

S404: The terminal device determines a first value of the rank based on the first performance difference and the channel information.

In this application, the terminal device determines, based on the first performance difference and the channel information, a channel indicator corresponding to each of N values of the rank, and uses a value of an optimal channel indicator in channel indicators corresponding to the N values as the first value.

For example, the channel indicator is a throughput. It is assumed that a maximum value of the rank is 2. In this case, the value of the rank may be 1 or 2. The terminal device calculates a throughput of a downlink channel when the rank is 1, and calculates a throughput of the downlink channel when the rank is 2. If the throughput of the downlink channel is the largest when the rank is 1, the first value is 1. If the throughput of the downlink channel is the largest when the rank is 2, the first value is 2. The maximum value of the rank is the larger one of a quantity of transmit ports of the access network device and a quantity of receive ports of the terminal device.

A method for calculating the throughput is not limited in this application. For example, it is assumed that the rank is 2, that is, a quantity of streams corresponding to the downlink channel between the terminal device and the access network device is 2. The terminal device may determine, based on the channel data, codewords of precoding matrices corresponding to the two streams. It is assumed that the two codewords are respectively P1 and P2. For the two streams, the terminal device may separately calculate SINRs corresponding to the two streams. For example, an SINR of a first stream in the two streams is represented as SINR1, an SINR of the second stream is represented as SINR2, and SINR1 and SINR2 may satisfy the following formula:

$$SINR1 = \frac{pow*(HP1)^H*(HP1)}{R+M} \qquad (1)$$

$$SINR2 = \frac{pow*(HP2)^H*(HP2)}{R+M} \qquad (2)$$

H represents the channel data, $(.)^H$ represents a conjugate transpose operation, pow represents power of each stream, R represents interference obtained when the terminal device measures the channel data, and M represents noise obtained when the terminal device measures the channel data.

Further, the terminal device may separately determine throughputs of the two streams based on SINR1 and SINR2. There are many methods for calculating the throughput. For example, the throughput may be calculated by using a Shannon formula, and specifically, the formula is as follows:

$$throughput1 = B * log10(1 + SINR1) \qquad (3)$$

$$throughput2 = B * log10(1 + SINR2) \quad (4)$$

B represents a bandwidth of a channel.

Finally, the throughput throughput1 corresponding to SINR1 and the throughput throughput2 corresponding to SINR2 are added to obtain the throughput of the downlink channel when the rank value is 2.

In this application, the terminal device may further determine a CQI corresponding to the first value. For example, there is a mapping relationship between a CQI and an SINR, and the mapping relationship may be configured in a protocol, or may be configured in another manner. The terminal device determines an SINR corresponding to the first value, so that the terminal device may determine, based on the mapping relationship between the CQI and the SINR, the CQI corresponding to the first value.

In this application, the terminal device may further determine decoding performance of the first decoder based on the first performance difference. For example, the terminal device may calculate a first correlation between an input P of the reference encoder and an output Q of the second decoder, and the first correlation corr1 may satisfy the following form:

$$corr1 = \frac{abs(P^H * Q)}{abs(P) * abs(Q)} \quad (5)$$

abs() represent an absolute value operation. A value range of corr1 is [0, 1], and a larger value of corr1 indicates better decoding performance of the first decoder.

Further, the terminal device determines a second correlation between an input of the reference encoder and an output of the first decoder based on the first performance difference and the first correlation. For example, if the first performance difference is PD, the second correlation corr2 satisfies the following form:

$$corr2 = corr1 + PD \quad (6)$$

If the terminal device determines that the second correlation is less than or equal to a preset threshold, the terminal device may send indication information to the access network device. The indication information indicates the second correlation of the first decoder. The access network device determines, based on the indication information, that the performance of the first decoder is poor, so that further training may be performed on the first decoder, to optimize the performance of the first decoder.

S405: The terminal device sends, to the access network device, a rank indicator and a channel quality indicator corresponding to the first value. Correspondingly, the access network device receives, from the terminal device, the first value of the rank and the channel quality indicator corresponding to the first value.

The rank indicator indicates the first value. The rank indicator may be the first value, or may be an index of the first value. This is not limited in this application.

In this application, the terminal device may further send, to the access network device, the encoded bit stream corresponding to the channel data.

The access network device may determine the channel data based on the encoded bit stream. Further, the access network device may determine a precoding matrix based on one or more of the first value of the rank, the channel quality indicator corresponding to the first value, and the channel data. When transmitting downlink data to the terminal device, the access network device may precode the downlink data by using the precoding matrix, to improve signal quality of a downlink signal and increase a downlink throughput.

According to the method provided in this application, the terminal device determines the first value of the rank based on the first performance difference fed back by the access network device, so that the first value fed back by the terminal device to the access network device better matches the precoding matrix determined by the access network device, to improve feedback precision and accuracy.

In the foregoing embodiments provided in this application, the method provided in embodiments of this application is described from a perspective of interaction between devices. To implement functions in the method provided in embodiments of this application, the access network device or the terminal device may include a hardware structure and/or a software module, and implements the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. During actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

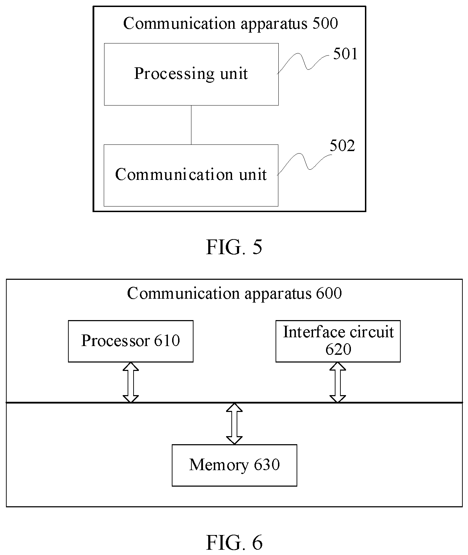

Same as the foregoing concept, as shown in FIG. 5, an embodiment of this application further provides a communication apparatus. The communication apparatus is configured to implement a function of the access network device or the terminal device in the foregoing method. For example, the communication apparatus may be a software module or a chip system. In this embodiment of this application, the chip system may include a chip, or may include a chip and another discrete component. The communication apparatus 500 may include a processing unit 501 and a communication unit 502.

In this embodiment of this application, the communication unit may also be referred to as a transceiver unit, and may include a sending unit and/or a receiving unit, which are respectively configured to perform sending and receiving steps of the access network device or the terminal device in the foregoing method embodiment.

The following describes in detail communication apparatuses provided in embodiments of this application with reference to FIG. 5 and FIG. 6. It should be understood that descriptions of apparatus embodiments correspond to the descriptions of the method embodiment. Therefore, for content that is not described in detail, refer to the method embodiment. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component that is in the communication unit 502 and that is configured to implement a receiving function may be considered as the receiving unit, and a component that is in the communication unit 502 and that is configured to implement a sending function may be considered as the sending unit. In other words, the communication unit 502 includes the receiving unit and the sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 500 performs the function of the terminal device in the procedure shown in FIG. 4 in the foregoing embodiment,

the communication unit is configured to receive first information from the access network device, where the first information is used for determining a first performance difference between performance of a first decoder in the access network device and performance of a second decoder in the terminal device;

the processing unit is configured to: decode, via the second decoder, an encoded bit stream corresponding to channel data, to obtain channel information; and determine a first value of a rank based on the first performance difference and the channel information; and

the communication unit is configured to send, to the access network device, a rank indicator and a channel quality indicator corresponding to the first value, where the rank indicator indicates the first value.

When the communication apparatus 500 performs the function of the access network device in the procedure shown in FIG. 4 in the foregoing embodiment,

the processing unit is configured to determine a first performance difference between performance of a first decoder in the access network device and performance of a second decoder in the terminal device; and

the communication unit is configured to: send first information to the terminal device, where the first information is used for determining the first performance difference; and receive, from the terminal device, a rank indicator and a channel quality indicator corresponding to a first value, where the rank indicator indicates the first value, the first value is determined based on the first performance difference and channel information, and the channel information is obtained by decoding, via the second decoder, an encoded bit stream corresponding to channel data.

The foregoing is merely an example. The processing unit 501 and the communication unit 502 may further perform other functions. For more detailed descriptions, refer to the related descriptions in the method embodiment shown in FIG. 4. Details are not described herein again.

FIG. 6 is a communication apparatus according to an embodiment of this application. The communication apparatus shown in FIG. 6 may be an implementation of a hardware circuit of the communication apparatus shown in FIG. 5. The communication apparatus is applicable to the foregoing flowcharts, and performs the function of the terminal device or the access network device in the foregoing method embodiment. For ease of description, FIG. 6 merely shows main components of the communication apparatus.

As shown in FIG. 6, the communication apparatus 600 includes a processor 610 and an interface circuit 620. The processor 610 and the interface circuit 620 are coupled to each other. It may be understood that the interface circuit 620 may be an interface circuit, a pin, an interface circuit, or an input/output interface. Optionally, the communication apparatus 600 may further include a memory 630 configured to: store instructions executed by the processor 610, store input data required by the processor 610 to run instructions, or store data generated after the processor 610 runs instructions.

When the communication apparatus 600 is configured to implement the method shown in FIG. 4, the processor 610 is configured to implement the function of the processing unit 501, and the interface circuit 620 is configured to implement the function of the communication unit 502.

When the communication apparatus is a chip used in the terminal device, the chip in the terminal device implements the function of the terminal device in the foregoing method embodiment. The chip in the terminal device receives information from another module (for example, a radio frequency module or an antenna) in the terminal device, where the information is sent by the access network device to the terminal device. Alternatively, the chip in the terminal device sends information to another module (for example, a radio frequency module or an antenna) in the terminal device, where the information is sent by the terminal device to the access network device.

When the communication apparatus is a chip used in the access network device, the chip in the access network device implements the function of the access network device in the foregoing method embodiment. The chip in the access network device receives information from another module (for example, a radio frequency module or an antenna) in the access network device, where the information is sent by the terminal device to the access network device. Alternatively, the chip in the access network device sends information to another module (for example, a radio frequency module or an antenna) in the access network device, where the information is sent by the access network device to the terminal device.

It may be understood that the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any conventional processor.

The memory in embodiments of this application may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art should understand that embodiments of this application may be provided as a method, a system, or a computer program product. Therefore, this application may use a form of hardware-only embodiments, software-only embodiments, or embodiments combining software and hardware. Moreover, this application may use a form of a computer program product that is implemented on one or more computer-usable storage media (including but not limited to a magnetic disk storage, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of procedures and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or one or more blocks in the block diagrams.

It is clear that a person skilled in the art can make various modifications and variations to this application without departing from the scope of this application. This application is intended to cover these modifications and variations of this application provided that they fall within the scope of the claims of this application and their equivalent technologies.

**Claims**

1. A communication method, applied to a terminal device side and comprising:

   receiving first information from an access network device, wherein the first information is used for determining a first performance difference between performance of a first decoder in the access network device and performance of a second decoder in a terminal device;

   decoding, via the second decoder, an encoded bit stream corresponding to channel data, to obtain channel information;

   determining a first value of a rank based on the first performance difference and the channel information; and

   sending, to the access network device, a rank indicator and a channel quality indicator corresponding to the first value, wherein the rank indicator indicates the first value.

2. The method according to claim 1, wherein the method further comprises:
sending, to the access network device, the encoded bit stream corresponding to the channel data.

3. The method according to claim 1 or 2, wherein the first information and the first performance difference satisfy a relationship of a preset function, and the method further comprises:
using, as the first performance difference, an output value that is of the preset function and that is obtained by using the first information as an input value.

4. The method according to claim 1 or 2, wherein the first information is an index of the first performance difference, and the method further comprises:
using a performance difference whose index is the first information as the first performance difference.

5. The method according to claim 1 or 2, wherein the first information is an index of a second performance difference, and the second performance difference is a performance difference between the performance of the first decoder and pre-configured reference performance; and the method further comprises:
determining the first performance difference based on the second performance difference and the reference performance.

6. The method according to any one of claims 1 to 5, wherein a maximum value of the rank is N, the first information indicates N first performance differences, and N is an integer greater than 0.

7. The method according to any one of claims 1 to 6, wherein the determining a first value of a rank based on the first performance difference and the channel information comprises:

determining, based on the first performance difference and the channel information, a channel indicator corresponding to each of N values of the rank, wherein N is an integer greater than 0; and
using a value of an optimal channel indicator in channel indicators corresponding to the N values as the first value.

8. A communication method, applied to an access network device side and comprising:

determining a first performance difference between performance of a first decoder in an access network device and performance of a second decoder in a terminal device;
sending first information to the terminal device, wherein the first information is used for determining the first performance difference; and
receiving, from the terminal device, a rank indicator and a channel quality indicator corresponding to a first value, wherein the rank indicator indicates the first value, the first value is determined based on the first performance difference and channel information, and the channel information is obtained by decoding, via the second decoder, an encoded bit stream corresponding to channel data.

9. The method according to claim 8, wherein the method further comprises:
sending, to the access network device, the encoded bit stream corresponding to the channel data.

10. The method according to claim 8 or 9, wherein the first information and the first performance difference satisfy a relationship of a preset function, and when an input value of the preset function is the first information, an output value of the preset function is the first performance difference.

11. The method according to claim 8 or 9, wherein the first information is an index of the first performance difference.

12. The method according to claim 8 or 9, wherein the first information is an index of a second performance difference, the second performance difference is a performance difference between the performance of the first decoder and pre-configured reference performance, and the first performance difference is determined based on the second performance difference and the reference performance.

13. The method according to any one of claims 8 to 12, wherein a maximum value of a rank is N, the first information indicates N first performance differences, and N is an integer greater than 0.

14. The method according to any one of claims 8 to 13, wherein the first value is a value of an optimal channel indicator in channel indicators corresponding to N values of the rank, N is an integer greater than 0, and a channel indicator corresponding to each of the N values of the rank is determined based on the first performance difference and the channel information.

15. A communication apparatus, comprising:

a communication unit, configured to receive first information from an access network device, wherein the first information is used for determining a first performance difference between performance of a first decoder in the access network device and performance of a second decoder in a terminal device; and
a processing unit, configured to: decode, via the second decoder, an encoded bit stream corresponding to channel data, to obtain channel information; and determine a first value of a rank based on the first performance difference and the channel information, wherein
the communication unit is configured to send, to the access network device, a rank indicator and a channel quality indicator corresponding to the first value, wherein the rank indicator indicates the first value.

16. A communication apparatus, comprising:

a processing unit, configured to determine a first performance difference between performance of a first decoder in an access network device and performance of a second decoder in a terminal device; and
a communication unit, configured to: send first information to the terminal device, wherein the first information is used for determining the first performance difference; and receive, from the terminal device, a rank indicator and a channel quality indicator corresponding to a first value, wherein the rank indicator indicates the first value, the first value is determined based on the first performance difference and channel information, and the channel information is obtained by decoding, via the second decoder, an encoded bit stream corresponding to channel data.

17. A computer-readable storage medium, wherein the storage medium stores a computer program or instructions, and when the computer program or the instructions are run on a computer, the method according to any one of claims 1 to 14 is implemented.

18. A computer program product, comprising a computer program or instructions, wherein when the computer program or the instructions are run on a computer, the method according to any one of claims 1 to 14 is implemented.

19. A communication apparatus, comprising a processor and a communication circuit, wherein the processor is configured to perform the method according to any one of claims 1 to 14.

20. A communication system, comprising the communication apparatus according to claim 15 and the communication apparatus according to claim 16.

FIG. 1

FIG. 2

FIG. 3

```
┌─────────────┐                              ┌─────────────┐
│   Access    │                              │  Terminal   │
│   network   │                              │   device    │
│   device    │                              │             │
└─────────────┘                              └─────────────┘
```

401: The access network device determines a first performance difference between performance of a first decoder in the access network device and performance of a second decoder in the terminal device

402: The access network device sends first information to the terminal device

First information →

403: The terminal device decodes, via the second decoder, an encoded bit stream corresponding to channel data, to obtain channel information

404: The terminal device determines a first value of a rank based on the first performance difference and the channel information

405: The terminal device sends, to the access network device, a rank indicator and a channel quality indicator corresponding to the first value

← Rank indicator and channel quality indicator

FIG. 4

Communication apparatus 500

Processing unit

501

Communication unit

502

FIG. 5

Communication apparatus 600

Processor 610

Interface circuit 620

Memory 630

FIG. 6

## INTERNATIONAL SEARCH REPORT

| | International application No. |
| --- | --- |
| | **PCT/CN2023/096665** |

| A. | CLASSIFICATION OF SUBJECT MATTER |
| --- | --- |

H04B7/0413(2017.01)i

According to International Patent Classification (IPC) or to both national classification and IPC

| B. | FIELDS SEARCHED |
| --- | --- |

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

3GPP, CNTXT, CNABS, WOTXT, USTXT, EPTXT, VEN, IEEE, CNKI: 编码器, 解码器, 参考, 多输入多输出, 反馈, 信道状态, 基站, 用户设备, 人工智能, 深度学习, 卷积网络, encoder, decoder, reference, MIMO, feedback, channel state, CSI, base station, UE, AI, deep learning, CNN

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021142605 A1 (HUAWEI TECHNOLOGIES CO., LTD.) 22 July 2021 (2021-07-22) description, page 7, line 35-page 14, line 11, and page 24, line 3-page 27, line 5, and figures 1-4 | 1-20 |
| A | CN 111901024 A (YANSHAN UNIVERSITY) 06 November 2020 (2020-11-06) entire document | 1-20 |
| A | CN 113810086 A (HUAWEI TECHNOLOGIES CO., LTD.) 17 December 2021 (2021-12-17) entire document | 1-20 |
| A | WO 2022004927 A1 (LG ELECTRONICS INC.) 06 January 2022 (2022-01-06) entire document | 1-20 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **06 September 2023** | **09 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/096665**

| Patent document cited in search report | | | Publication date (day/month/year) | Patent family member(s) | | | Publication date (day/month/year) |
|---|---|---|---|---|---|---|---|
| WO | 2021142605 | A1 | 22 July 2021 | EP | 4075682 | A1 | 19 October 2022 |
| | | | | EP | 4075682 | A4 | 07 December 2022 |
| | | | | US | 2022353725 | A1 | 03 November 2022 |
| | | | | CN | 114846748 | A | 02 August 2022 |
| CN | 111901024 | A | 06 November 2020 | CN | 111901024 | B | 05 November 2021 |
| CN | 113810086 | A | 17 December 2021 | WO | 2021249515 | A1 | 16 December 2021 |
| | | | | EP | 4156538 | A1 | 29 March 2023 |
| WO | 2022004927 | A1 | 06 January 2022 | KR | 20230031892 | A | 07 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210617141